Europäisches Patentamt

European Patent Office

Office européen des brevets

(11) Publication number: **0 507 338 A1**

# EUROPEAN PATENT APPLICATION

(21) Application number: **92105823.6**

(22) Date of filing: **03.04.92**

(51) Int. Cl.⁵: **G01P 15/10**

(30) Priority: **05.04.91 JP 73058/91**

(43) Date of publication of application:
**07.10.92 Bulletin 92/41**

(84) Designated Contracting States:
**DE FR GB**

(71) Applicant: **JAPAN AVIATION ELECTRONICS INDUSTRY, LIMITED**
**21-6, Dogenzaka 1-chome**
**Shibuya-ku Tokyo(JP)**

(72) Inventor: **Hisashi, Yabe, c/o Japan Aviation Elec., Ind. Ltd.**
**21-6, Dogenzaka 1-chome, Shibuya-ku**
**Tokyo(JP)**
Inventor: **Yoshiyuki, Ando, c/o Japan Aviation Elec., Ind.Ltd**
**21-6, Dogenzaka 1-chome, Shibuya-ku**
**Tokyo(JP)**

(74) Representative: **Blumbach Weser Bergen Kramer Zwirner Hoffmann Patentanwälte**
**Radeckestrasse 43**
**W-8000 München 60(DE)**

(54) **Support structure for an accelerometer of the oscillating type.**

(57) A pendulum (12) is supported to a stationary member (11) in a manner to be elastically turnable about an axis of rotation (13) defined near the center of the pendulum. The center of gravity (C) of the pendulum is located further to the one side of the axis of rotation than to the other side thereof. Oscillators (15,16), which extend in the same direction perpendicular to the pendulum and its axis of rotation, are attached at one end to both end portions of the pendulum opposite relative to the axis of rotation. The other ends of the oscillators are fixed to the stationary member.

FIG. 2

## BACKGROUND OF THE INVENTION

The present invention relates to an oscillating type accelerometer for detecting the acceleration of an object in an inertial space and, more particularly, to a structure for supporting its oscillators.

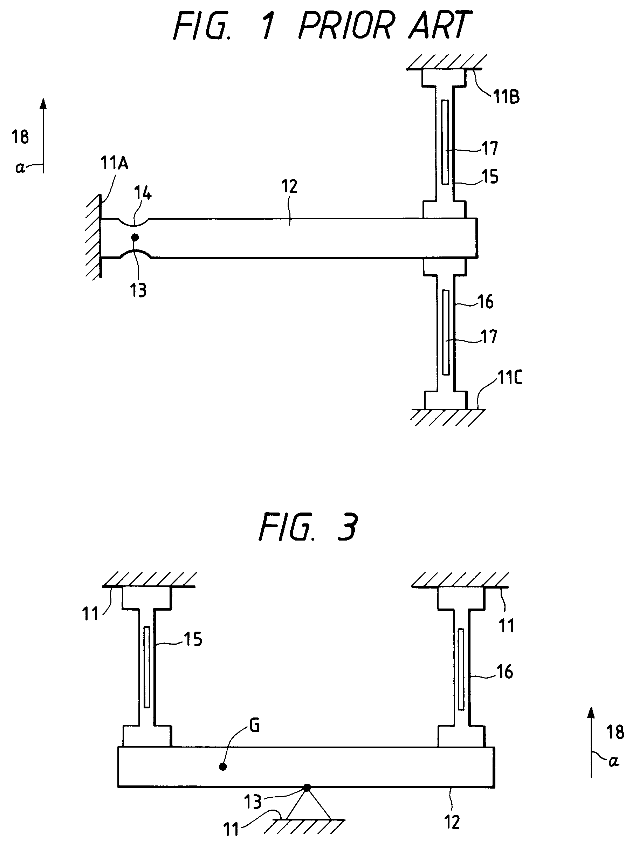

Fig. 1 shows an oscillator supporting structure of a conventional oscillating type accelerometer. A pendulum 12 has its one end supported on a stationary part 11A in a cantilever fashion. The pendulum 12 has a thin hinge 14 in the vicinity of its supported end and the thin hinge 14 allows elastic rotational displacement of the pendulum 12 with the center 13 of the hinge 14 as the axis of rotation (normal to the plane of the paper). Fixed at one end to the free end portion of the pendulum 12 are a pair of quartz oscillators 15 and 16 which extend at both sides of the pendulum 12 substantially perpendicularly to it and the axis of rotation 13. The quartz oscillators 15 and 16 have their other ends fixed to stationary parts 11B and 11C, respectively The stationary parts 11A, 11B and 11C form parts of a common stationary member not shown. The quartz oscillators 15 and 16 each have a slit 17 extending lengthwise thereof and when in use they are excited at their natural frequencies.

A brief description will be given of the detection of acceleration by the conventional oscillating type accelerometer employing the above-mentioned oscillator supporting structure. When acceleration α (for example, upward in Fig. 1) 18 in a direction at right angles to both of the direction of extension of the pendulum 12 and the axis of rotation 13, i.e. in the direction of extension of the oscillators 15 and 16, is applied to the stationary part 11A which supports the pendulum 12, the pendulum 12 is subject to an inertial or kinetic reaction (downward in Fig. 1) reverse in direction to the acceleration α, that is, a force which is reverse in direction to the acceleration α and has a magnitude proportional thereto. As a result, the pendulum 12 is urged by the force to turn about the imaginary rotary shaft 13, clockwise in Fig. 1, exerting a tensile force to the one (i.e. upper) oscillator 15 and a compressive force to the other (i.e. lower) oscillator 16. Then, one of the oscillators 15 and 16 becomes longer than the other, and consequently, the natural frequency of the one oscillator becomes low and the natural frequency of the other becomes high accordingly; namely, the natural frequencies of the two oscillators 15 and 16 vary differentially relative to each other. Hence, the magnitude and direction of the acceleration α can be detected by detecting the magnitudes of the variations in the natural frequencies.

With the use of two oscillators as mentioned above, it is possible to increase the detection sensitivity and to cancel deviations of their natural frequencies by a temperature change and hence exclude its influence.

With such a conventional oscillator supporting structure, however, since the pair of oscillators 15 and 16 are fixed to the both sides of the free end portion of the pendulum 12 perpendicularly thereto, the length of the accelerometer in the direction of extension of the oscillators is equal to the sum of their lengths, and hence the miniaturization of the accelerometer is difficult. Besides, the two oscillators 15 and 16 are disposed adjacent with the pendulum 12 interposed therebetween, and hence their oscillations interfere with each other, leading to the degradation of characteristics of the accelerometer.

## SUMMARY OF THE INVENTION

It is therefore an object of the present invention to provide an oscillator supporting structure for an oscillating type accelerometer which permits miniaturization of the accelerometer and reduces the interference of oscillation between two oscillators and hence improves characteristics of the accelerometer.

According to the present invention, the axis of rotation of the pendulum is located in the vicinity of its center, the pendulum is supported at opposite sides on a stationary part at the axis of rotation and the center of gravity of the pendulum is located further to the one side than to the other relative to the axis of rotation of the pendulum. The pendulum has attached thereto between both sides of the axis of rotation and the stationary part oscillators extending substantially perpendicularly thereto in the same direction.

With such an oscillator supporting structure, when an acceleration is applied to the stationary part in a direction at right angles to both of the pendulum and its axis of rotation, that is, in the direction of extension of the oscillators, an inertial reaction opposite in direction to the acceleration is exerted on the pendulum. Since the center of gravity of the pendulum is located further to the one side of the axis of rotation than to the other side thereof, the force exerted on that portion of the pendulum at the one side of the axis of rotation is larger than the force exerted at the other side thereof and the pendulum is urged to turn about the axis of rotation accordingly. As the result of this, the one oscillator is stretched but the other oscillator is compressed and the natural frequency of the one oscillator becomes lower than the natural frequency of the other. By detecting this differential change, the magnitude and direction of the input acceleration can be detected.

## BRIEF DESCRIPTION OF THE DRAWINGS

Fig. 1 is a diagram schematically showing the principles of a conventional oscillator supporting structure for an oscillating type accelerometer;

Fig. 2 is a perspective view illustrating an embodiment of the oscillator supporting structure according to the present invention; and

Fig. 3 is a diagram illustrating the principles of the oscillator supporting structure shown in Fig. 2.

## DESCRIPTION OF THE PREFERRED EMBODIMENT

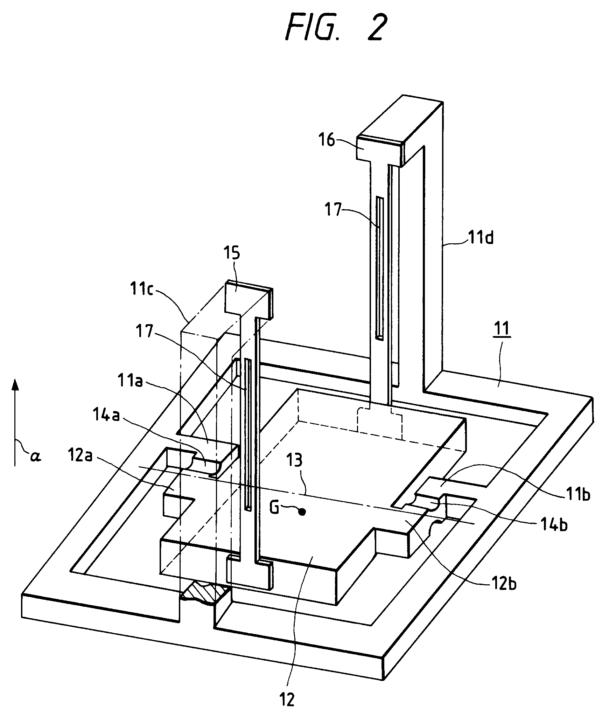

Fig. 2 schematically illustrates an embodiment of the oscillator supporting structure according to the present invention and Fig. 3 is a diagram explanatory of the principles of the invention. The pendulum 12 is supported by the stationary member 11 in a manner to be turnable about the axis of rotation 13 located near the center of the pendulum 12. The stationary member 11 in this embodiment is a square frame, inside of which the pendulum 12 is disposed flush therewith. The frame 11 and the pendulum 12 are formed as a unitary structure by machining a block of aluminum alloy or stainless steel. The pendulum 12 is a rectangular plate-like member one size smaller than the frame 11 and four sides of the former are substantially parallel to four sides of the later, respectively. Both longer sides of the frame 11 have support portions 11a and 11b protrusively provided on their inner side faces centrally thereof, whereas the pendulum 12 has support portions 12a and 12b outwardly extending from its both longer sides at positions off the centers thereof on the same side. The support portions 11a, 11b and those 12a, 12b are opposite and spaced apart from each other in the plane containing the pendulum 12. The opposed support portions 11a, 12a and 11b, 12b are coupled together by thin hinges 14a and 14b, respectively. The axes of the thin hinges 14a and 14b are aligned with each other at right angles to the longitudinal direction of the pendulum 12, and the thin hinges 14a and 14b constitute the axis of rotation 13. Thus, the pendulum 12 is supported by the frame 11 in a manner to be elastically turnable about the axis of rotation 13.

The center of gravity C of the pendulum 12 is located further to the one side thereof than the other relative to the axis of rotation 13 (toward the oscillator 15). In this embodiment the pendulum 12 has a rectangular body of a uniform thickness, the axis of rotation 13 is located in alignment with the lateral center line of the pendulum 12 passing through the center in its longitudinal direction and the support portions 12a and 12b are formed at positions further to the one side of the axis of rotation 13 than the other, by which the center of gravity C of the pendulum 12 is located further to the one side of the axis of rotation 13 than the other.

The oscillators 15 and 16 are provided between the opposite ends of the pendulum with respect to the axis of rotation 13 and the stationary part 11. The oscillators 15 and 16 are substantially perpendicular to the pendulum 12 and the axis of rotation 13 and extend in the same direction with respect to the main surface of the pendulum 12. In this embodiment the oscillators 15 and 16 are fixed at one end to the opposite end faces of the pendulum 12 centrally thereof. On the shorter sides of the frame 11 there are formed integrally therewith a pair of arms 11c and 11d which extend in the same direction in opposing relation to the oscillators 15 and 16, respectively. The arms 11c and 11d have their top end portions bent inwardly in an L-letter form and the other ends of the oscillators 15 and 16 are fixed to the end faces of the bent portions.

The oscillators 15 and 16 may be conventional oscillators such as quartz oscillators and each have the slit 17 extending lengthwise thereof. It is preferable that the oscillators 15 and 16 be of the same shape, the same size and the same material. The oscillators 15 and 16, when incorporated in an accelerometer, are excited by, for example, exciting means (not shown) at their natural frequencies. Furthermore, natural frequency detecting means (not shown) is provided to detect changes in the natural frequencies which are caused by the application of an acceleration.

With the structure described above, when an acceleration $\alpha$ is applied to the frame 11 at right angles to its main surface, the pendulum 12 is urged by the reaction to move in a direction opposite to that of the acceleration $\alpha$ relative to the frame 11. Since the center of gravity C of the pendulum 12 is off the axis of rotation 13, the pendulum 12 acts to elastically turn about the axis of rotation 13, that is, the portion of the pendulum wherein the center of gravity C is located is urged to turn in the direction opposite to that of the acceleration $\alpha$, whereas the other portion of the pendulum 12 without the center of gravity C is urged to turn in the same direction as that of the acceleration $\alpha$. In this embodiment the one oscillator 15 expands and the other oscillator 16 contracts. By detecting the difference between the natural frequencies of the oscillators 15 and 16, the magnitude and direction of the input acceleration $\alpha$ can be detected.

As described above, according to the present invention, since the two oscillators are mounted to extend on the pendulum at the same side thereof, the size of the accelerometer in the direction of extension of the oscillator can be made close to the length of one oscillator, that is, the size in this direction can be reduced down to about 1/2 that needed in the prior art. Moreover, since the oscillators 15 and 16 are disposed near the opposite end portions of the pendulum and are appreciably spaced apart, their oscillations hardly interfere with each other -- this prevents degradation of characteristics of the accelerometer and hence improves them as compared with the conventional accelerometer.

It will be apparent that many modifications and variations may be effected without departing from the scope of the novel concepts of the present invention.

## Claims

1. An oscillator supporting structure for an accelerometer, comprising:

    pendulum means having a pair of first support means at opposite sides laterally thereof, said pair of first support means defining an axis of rotation which is located off the center of gravity of said pendulum means and extends laterally thereof;

    hold means coupled with said pair of first support means and holding said pendulum means in such a manner that said pendulum means is elastically turnable about said axis of rotation; and

    first and second oscillators substantially identical in shaped, fixed at one end to both end portions of said pendulum means in its longitudinal direction at opposite sides of said axis of rotation and extending in parallel and in the same direction at right angles to said axis of rotation, said first and second oscillators being fixed at the other end to said hold means.

2. The oscillator supporting structure of claim 1 wherein said pendulum means has a substantially rectangular plate portion having long sides and short sides, said pair of first support means are protrusively provided on said long sides of said pendulum means, and said hold means has inner side faces adjacent but spaced apart from said long sides of said pendulum means and a pair of second support means protrusively provided on said inner side faces and elastically coupled with said pair of first support means.

3. The oscillator supporting structure of claim 2 wherein corresponding ones of said pair of first support means and said pair of second support means protrude laterally from said long sides of said pendulum means and said inner side faces of said hold means so that they face each other from opposite sides across said axis of rotation, opposed end portions of said first and second support means being coupled together and said coupled portions being made thin and defining said axis of rotation.

4. The oscillator supporting structure of claim 2 or 3 wherein said hold means includes a frame portion which surrounds said pendulum means in about the same plane in spaced relation to said short and long sides thereof and to which said pendulum means is fixed, and first and second support arms extending in the same direction from said frame portion and fixedly supporting at their tip end portions said other ends of said first and second oscillators.

5. The oscillator supporting structure of claim 3 wherein said axis of rotation lies on the center line of said rectangular plate portion of said pendulum means and said pair of first support means protruding from said long sides of said pendulum means causes the center of gravity of said pendulum means to be located off said axis of rotation.

## FIG. 1 PRIOR ART

## FIG. 3

# FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4 881 408 (HULSING, II ET AL)<br>* abstract; figures 1-5 *<br>--- | 1-3,5 | G01P15/10 |
| Y | US-A-4 736 629 (COLE)<br>* abstract *<br>* column 6, line 47 - column 7, line 3 *<br>* figure 3 *<br>--- | 1-3,5 | |
| A | WO-A-9 010 237 (SUNDSTRAND DATA CONTROL)<br>* abstract; figures 1-4 *<br>--- | 1-5 | |
| A | US-A-4 879 914 (NORLING)<br>* abstract; figures 7,8 *<br>--- | 1-5 | |
| A | GB-A-2 186 085 (CHARLES STARK DRAPER LABORATORY)<br>* abstract; figure 7 *<br>----- | 1-5 | |
| | | | **TECHNICAL FIELDS SEARCHED (Int. Cl.5 )**<br><br>G01P<br>G01L |

The present search report has been drawn up for all claims

| Place of search | Date of completion of the search | Examiner |
|---|---|---|
| THE HAGUE | 10 JULY 1992 | JONSSON P.O. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)